# EUROPEAN PATENT APPLICATION

(11) **EP 4 167 036 A1**
(43) Date of publication of application: **19.04.2023**
(21) Application number: 22201437.5
(22) Date of filing: 13.10.2022
(51) Int. Cl.: G05B 19/414, G05B 19/05, G05B 19/4093, G05B 19/4155

(54) **METHODS AND SYSTEMS FOR PROGRAMMING COMPUTER NUMERICAL CONTROL MACHINES**

(30) Priority: 14.10.2021 US 202163255878 P; 08.03.2022 US 202263317755 P
(71) Applicant: ATS CORPORATION, Cambridge, Ontario N3H 4R7 (CA)
(72) Inventor: NICHOLSON, Kenneth Wayne, Cambridge, N3H 4R7 (CA); ALMAS, Robert David, Cambridge, N3H 4R7 (CA); MUNROE, Philip David, Cambridge, N3H 4R7 (CA); MCLEAN, James Mark, Cambridge, N3H 4R7 (CA)
(74) Representative: ip21 Ltd

(57) **Abstract**

There is described systems and methods for programming and configuring part-processing devices and production stations. Methods of programming the control system of a part-processing device for controlling one or more tooling components, sensors and/or motion systems includes the step of loading a software backplane onto the control system, the software backplane being configured to run on an operating system of the control system and to interface with one or more configurable applications. The method also comprises the step of loading one or more configurable applications associated with the one or more tooling components onto the control system, the one or more applications being configured to interface with the software backplane. The method also comprises the step of configuring the one or more configurable applications to control the one or more tooling components, sensors and/or motion systems pf the part-processing device.

## Description

### FIELD

The present disclosure generally relates to manufacturing using computer numerical control (CNC) machines. In particular, the present disclosure relates to methods and systems for programming and integrating computer numerical control machines.

### BACKGROUND

Manufacturing of products includes the automated creation and testing of parts, and the assembly of the finished product from parts. In the following description the term "component" is chosen as a general term to describe individual parts, an assembly of parts, materials such as adhesives, weld consumables or plastic to be molded, and the final product of a manufacturing process.

WO2014078938A1 describes methods of manufacturing using computer numerical control drives to move and process components through various stages where the timing, position, orientation, linear or rotary velocity, and acceleration of the components and devices that deliver/receive components are matched. Computer numerical control of linear conveyors or drives, actuators, sensors, and other devices is coordinated through programming known as "electronic camming".

Electronic camming coordinates the actuation of multiple mechanisms through electronic controls and software. The mechanisms need not physically interact, and synchronization of their motions is electronically controlled with extreme accuracy and flexibility through software interaction. Electronic camming links movements of devices through electronic means (i.e., software), conceptually in the same manner that gears, linkages, and timing chains link movements of mechanical devices together, with enhanced accuracy, control, and design flexibility.

An application of electronic camming in the processing of single components or assembling of multiple components together is described in international publication WO2014078938A1 that can be summarized as follows. A first component is loaded, separated from an intake stream and accelerated. The component is delivered at a predetermined delivery time, delivery position, delivery speed and moving along a delivery trajectory to be delivered to and received by a processing tool that is also moving. The motions of the delivery device and the processing tool receiving of the component are electronically synchronized. The transfer of the component from one device to the other is coordinated and timed electronically. Through the processing or assembly process, the actuators that move the devices to handle the component are electronically cammed and synchronized together.

The same concept can be applied to each stage of a manufacturing process where separate devices have their motions coordinated through electronic camming and computer numerical control program software. Manufacturing involves storage of material/components, motion control, and processing of material/components, for example: molding, forming, cutting, bonding, welding, stamping, dispensing, assembling, fastening; as well as inspecting, testing, measuring, and rejecting failed material/components.

While the level of flexibility and customization that such electronically cammed computer numerical control machines affords users has been significantly increased over known mechanically cammed systems, known methods of programming and integrating electronically cammed computer numerical control machines are based on those developed to program and integrate mechanically cammed CNC machines. As such, known methods have failed to allow users to take full advantage of the increases in flexibility and customization inherent in electronically cammed computer numerical control machines.

For example, known methods of programming and integrating CNC machines include selecting a number of hardware actuators required for performing a particular task (such as, for example, assembling a component), writing custom code that allows the programmable logic controllers (PLC) to control all aspects of the hardware actuators, testing the custom code and delivering the CNC machine to a customer. Once delivered, any changes to how the CNC machine operates require system integrators to rewrite the custom code for the machine, upload the custom code to the PLC, test, debug, etc.

Accordingly, there is a need for methods and systems of programming and integrating electronically cammed computer numerical control machines that allow users to take advantage of the intrinsic flexibility and customizability of electronically cammed machines.

### SUMMARY

The following summary is intended to introduce the reader to various aspects of the applicant's teaching, but not to define any invention.

The various embodiments described herein generally relate to systems and methods providing self-contained and modular software control of self-contained and modular electronic camming components.

In one aspect of the present disclosure, there is provided a computer numerically controlled part-processing device including one or more tooling components and a part-processing control system. The part-processing control system comprises a storage component. The storage component has stored thereon a software backplane arranged to run on an operating system of the part-processing control system and to interface with one or more configurable applications. The storage component also has stored thereon one or more configurable applications associated with the one or more tooling components. The one or more configurable applications are arranged to interface with the software backplane. The part-processing control system also comprises a processor arranged to receive configuration information and to configure the one or more configurable applications to control the one or more tooling components.

In another aspect of the present disclosure, there is provided a production station comprising a plurality of computer numerically controlled part-processing devices in accordance with the above.

In yet another aspect of the present disclosure, there is provided a method of programming a part-processing control system of a computer numerically controlled part-processing device including one or more tooling components. The method comprises loading a software backplane onto a storage component of the part-processing control system. The software backplane is arranged to run on an operating system of the part-processing control system and to interface with one or more configurable applications. The method further comprises loading one or more configurable applications associated with the one or more tooling components onto a storage component of the part-processing control system. The one or more configurable applications is arranged to interface with the software backplane. The method further comprises configuring the one or more configurable applications to control the one or more tooling components.

In yet another aspect of the present disclosure, there is provided a system for programming a part-processing control system of a computer numerically controlled part-processing device including one or more tooling components. The part-processing control system is arranged to control the one or more tooling components. The system comprises a first computing device in data communication with the part-processing control system. The first computing device includes a first processor and a first non-transitory computer-readable medium storing instructions that, when executed by the first processor cause the first computing device to carry out a series of first steps. The first steps include loading a software backplane onto a storage component of the part-processing control system. The software backplane is arranged to run on an operating system of the part-processing control system and to interface with one or more configurable applications. The first steps also include loading one or more configurable applications associated with the one or more tooling components onto a storage component of the part-processing control system. The one or more configurable applications are arranged to interface with the software backplane. The system also comprises a second computing device in data communication with the control system. The second computing device including a second processor and a second non-transitory computer-readable medium storing instructions that, when executed by the second processor cause the second computing device to carry out a series of second steps. The second steps include loading configuration information onto a storage component of the part-processing control system to configure the one or more configurable applications to control the one or more tooling components.

In some embodiments, the configuration information includes configuration settings and work instructions.

In some embodiments, the configuration settings relating to a configurable application of the one or more configurable applications include information relating to the type of tooling component associated with that configurable application.

In some embodiments, the work instructions relating to a configurable application of the one or more configurable applications include one or more of the timing, position, speed, velocity, and acceleration of the tooling component associated with that configurable application.

In some embodiments, each the one or more tooling components comprises one or more actuators, and wherein each actuator is controlled by a dedicated configurable application.

In some embodiments, the one or more actuators include one or more servomotors.

In some embodiments, the part-processing device further comprises a sensor system including one or more sensors for collecting data from the environment of the part-processing device. The storage component has stored thereon one or more configurable sensor applications associated with the one or more sensors. The processor is further arranged to configure the one or more configurable sensor applications associated with the one or more sensors to control the one or more sensors.

In some embodiments, the one or more sensors comprise one of a LiDAR device or a video camera.

In some embodiments, the part-processing device further comprises a motion system including one or more motion actuators for facilitating motion of the tooling components of the part-processing device. The storage component has stored thereon one or more configurable motion actuator applications associated with the one or more motion actuators. The processor is further arranged to configure the one or more configurable motion actuator applications associated with the one or more motion actuators to control the one or more motion actuators.

In some embodiments, the one or more motion actuators comprise one of a pneumatic actuator and a servomotor.

In some embodiments, the software backplane is programmed with routing of work and configuration information.

In some embodiments, the routing of work and configuration information includes the software connections, constructs, and definitions relating to how software elements interact with each other.

### DRAWINGS

The drawings included herewith are for illustrating various examples of apparatus, systems, and processes of the present specification and are not intended to limit the scope of what is taught in any way. In the drawings:
FIG. 1 is a schematic diagram of an example automated production station for mass producing and testing a plurality of different products;
FIG. 2 is a schematic diagram of an example part-processing device for the automated production station of FIG. 1;
FIG. 3 is another schematic diagram of an example part-processing device for the automated production station of FIG. 1;
FIG. 4 is a schematic diagram of an example system for processing workpieces using asynchronous feeding of workpieces;
FIG. 5 is a schematic diagram of an example system for processing workpieces using synchronous feeding of workpieces;
FIG. 6 is a schematic diagram of example workpiece transfer devices including validation stations;
FIG. 7 is a simplified schematic diagram of the software architecture of a part-processing control system in accordance with the prior art;
FIG. 8 is a simplified schematic diagram of the software architecture of a production station system in accordance with the prior art;
FIG. 9 is a simplified schematic diagram of a unconfigured software architecture of a part-processing control system in accordance with the present disclosure;
FIG. 10 is a simplified schematic diagram of a configured software architecture and associated part-processing device in accordance with the present disclosure;
FIG. 11 is a schematic diagram of a system for programming and configuring a part-processing control system in accordance with the present disclosure; and
FIG. 12 is a representation of a method of programming and configuring a production station in accordance with the present disclosure.

### DESCRIPTION OF VARIOUS EMBODIMENTS

Various apparatus, systems, or processes will be described below to provide an example of an embodiment of each claimed invention. No embodiment described below limits any claimed invention and any claimed invention may cover apparatus, processes, or systems that differ from those described below. The claimed inventions are not limited to apparatus, systems, or processes having all of the features of any one apparatus, system, or process described below or to features common to multiple or all of the apparatus, systems, or processes described below. It is possible that an apparatus, system, or process described below is not an embodiment of any claimed invention. Any invention disclosed in an apparatus, system, or process described below that is not claimed in this document may be the subject matter of another protective instrument, for example, a continuing patent application, and the applicants, inventors, or owners do not intend to abandon, disclaim, or dedicate to the public any such invention by its disclosure in this document.

A production process can involve processing (e.g., transferring, transporting, handling, manipulating, assembling, testing, etc.) parts to produce a product. During the production process, the part requiring further processing (for example, a subcomponent or partially finished product) can be referred to as a workpiece. The workpiece can be moved through a production station among various part-processing devices that perform the various operations on the workpiece(s) in production of the product. In some examples, such production processes can utilize a large number of standard, multi-purpose, re-configurable machines for performing specific operations on the workpiece(s) in production of the product.

This description employs the terms "delivery device", "receiving device", and "completion device" merely to imply a progression of the workpiece or processing from delivery to receiving to completion. Alternative terms could be used such as first, second and third to imply the same progression.

To introduce different parts/workpieces and/or produce different products, addition of machines and/or separate processing lines may be required. In some examples, limited space in production facilities may preclude such expansion. Certain machines may also require manual reprogramming and retooling when switching between different parts and/or products for processing, which may contribute to production overhead and inefficiencies.

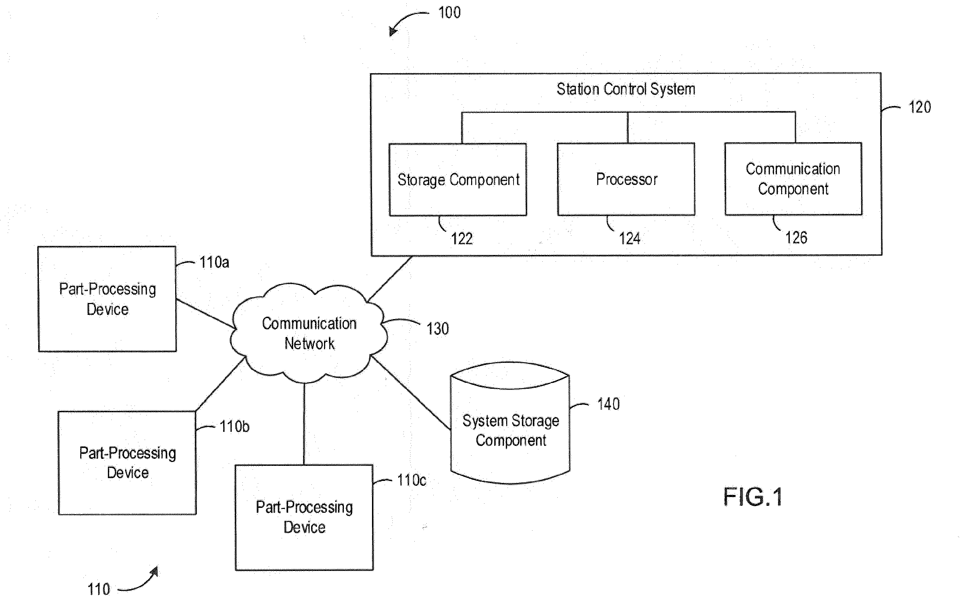

Referring to FIG. 1, an example automated production station 100 is shown for producing different products. The production station 100 can include one or more part-processing devices 110, a station control system 120, a communication network 130, and a system storage component 140. Although only three part-processing devices 110a, 110b, and 110c are shown in FIG. 1, the automated production station 100 may include fewer or more part-processing devices 110.

The station control system 120 can include control interfaces that allow a user to electronically configure the automated production station 100. The station control system 120 can select control parameters for the part-processing device 110 to perform coordinated operations. The control parameters can be determined by the station control system 120 or received at the station control system 120 as input data. As shown in FIG. 1, the station control system 120 includes a station storage component 122, a station processor 124, and a station communication component 126.

The station storage component 122 can include RAM, ROM, one or more hard drives, one or more flash drives or some other suitable data storage elements such as disk drives. The station storage component 122 can include one or more databases for storing data related to the automated production station 100. The station storage component 122 can store data in respect of the operation of the automated production station 100, such as data in respect of the part-processing devices 110 and the coordinated operations being carried out by the part-processing devices 110.

For example, the station storage component 122 can store data received from the part-processing devices 110, data in respect of the coordinated operations delegated by the station control system 120, property data in respect of each of the part-processing devices 110, etc. The station storage component 122 can also store computer programs that are executable by the station processor 124 to facilitate communication between the station control system 120 and the part-processing devices 110, and configuration of the part-processing devices 110.

In some embodiments, the station storage component 122 can instead be the system storage component 140, which is accessible via the communication network 130.

In some embodiments, the station storage component 122 can store data that is more current based on the operation of the station control system 120, and the system storage component 140 can store data that is considered by the station control system 120 to unlikely be used in the immediate future. For example, the station storage component 122 can store operating data and part-processing property data only for the part-processing devices 110 operating during a certain production run or day, whereas the system storage component 140 can store the data for all part-processing devices 110, which is typically infrequently changed. In some embodiments, the system storage component 140 can be a third-party data storage.

The station processor 124 can control the operation of the station control system 120. The station processor 124 may be implemented any suitable processors, controllers, digital signal processors, graphics processing units, application specific integrated circuits (ASICs), field programmable gate arrays (FPGAs), microcontrollers, and/or other suitably programmed or programmable logic circuits that can provide sufficient processing power depending on the configuration, purposes and requirements of the station control system 120. In some embodiments, the station processor 124 can include more than one processor with each processor being configured to perform different dedicated tasks. The station processor 124 together with the processor at the part-processing devices 110 contribute to the control of the automated production station 100. In some embodiments, the processor 124 is implemented using a Programmable Logic Controller (PLC), as described in more detail herein.

The station communication component 126 can include any interface that enables the station control system 120 to communicate with various devices and other systems. For example, the station communication component 126 can facilitate communication with the other components of the automated production station 100, such as the part-processing devices 110 and the system storage component 140 via the communication network 130.

The station communication component 126 can include at least one of a serial port, a parallel port or a USB port, in some embodiments. The station communication component 126 may also include an interface to component via one or more of an Internet, Local Area Network (LAN), Ethernet, Firewire, modem, fiber, or digital subscriber line connection. Various combinations of these elements may be incorporated within the station communication component 126. For example, the station communication component 126 may receive input from various input devices, such as a mouse, a keyboard, a touch screen, a thumbwheel, a track-pad, a trackball, a card-reader, voice recognition software and the like depending on the requirements and implementation of the station control system 120.

The communication network 130 can include any network capable of carrying data, including the Internet, Ethernet, plain old telephone service (POTS) line, public switch telephone network (PSTN), integrated services digital network (ISDN), digital subscriber line (DSL), coaxial cable, fiber optics, satellite, mobile, wireless (e.g. Wi-Fi, WiMAX), SS7 signaling network, fixed line, local area network, wide area network, and others, including any combination of these, capable of interfacing with, and enabling communication between the station control system 120, the part-processing devices 110, and the system storage component 140.

For example, each part-processing device 110 and the station control system 120 may be equipped with a wireless communication interface to enable wireless communications according to a Wi-Fi protocol (e.g., IEEE 802.11 protocol or similar).

Similar to the station storage component 122, the system storage component 140 can store information about the part-processing devices 110, including operating data, profile data (e.g., servomotor profile data), motion data with which the part-processing devices 110 operate (e.g., tool motion data), data in respect of products that the automated production station can produce, data in respect of parts or workpieces that may be used to produce the products, and data in respect of expected or anticipated workpiece responses to flow tests.

Profile data, motion data, product data, part data, and workpiece data can be stored in the system storage component 140 for subsequent retrieval by the part-processing devices 110. The part-processing devices 110 can download motion data, product data, part data, and workpiece data from the system storage component 140 via the communication network 130, for example.

Profile data and motion data can be generated for the part-processing devices 110. For example, tables representing the profile data and motion data of tools of the part-processing devices 110 can be imported and form the basis for the profile data and motion data, respectively. In another example, the station control system 120 can generate the motion data based on data collected by the part-processing device 110.

In some embodiments, operating data can be stored in the system storage component 140, and the operating data can be retrieved by the station control system 120 when needed. The station control system 120 can download the operating data from the system storage component 140 via the communication network 130. Example operating data can include, but is not limited to, a current position of one or more tooling of the part-processing device 110, a current speed of one or more tooling of the part-processing device 110, a current velocity of one or more tooling of the part-processing device 110, and a current acceleration of one or more tooling of the part-processing device 110. In some embodiments, the operating data, or at least some of the operating data, can be stored in the station storage component 122.

In some embodiments, one or more computing devices (not shown in FIG. 1) can communicate with the automated production station 100 via the communication network 130. A user may electronically configure the automated production station 100 using the computing device, as described in more detail elsewhere herein. The computing device can include any device capable of communication with other devices through a network such as communication network 130. The computing device can include a processor and memory, and may be an electronic tablet device, a personal computer, workstation, server, portable computer, mobile device, personal digital assistant, laptop, smart phone, WAP phone, an interactive television, video display terminals, gaming consoles, and portable electronic devices or any combination of these.

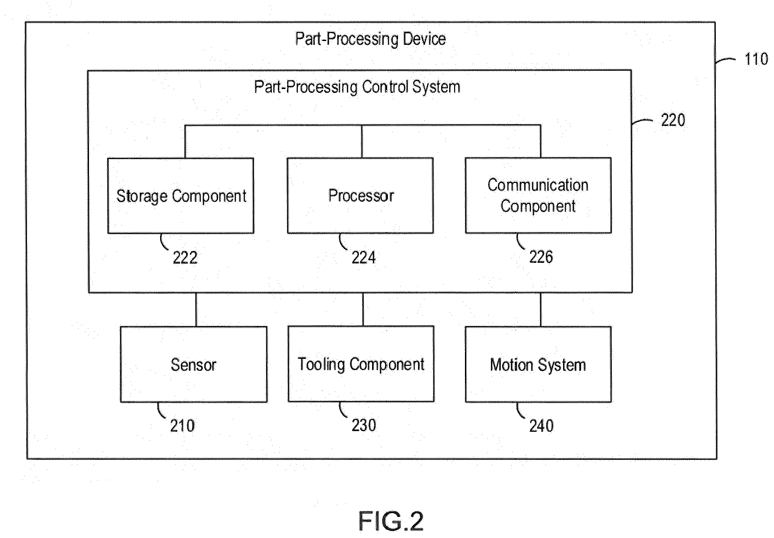

Reference is now made to FIG. 2, which shows a block diagram of an example part-processing device 110. The example part-processing device 110 can be part-processing devices 110a, 110b, 110c of the automated production station 100. The part-processing device 110 includes a part-processing control system 220, a sensor system 210, one or more tooling components 230, and a motion system 240.

The part-processing control system 220 can include a processor 224, a storage component (or memory) 222, and a communication component 226. The part-processing control system 220 can facilitate the operation of the part-processing device 110. The part-processing control system 220 can include control interfaces that allow a user to configure the part-processing device 110, as described in more detail herein. The part-processing control system 220 can collect and store motion data of the part-processing device 110 in the part-processing storage component 222.

The processor 224 can include any suitable processors, controllers, digital signal processors. microcontrollers, and/or other suitably programmed or programmable logic circuits that can provide sufficient processing power depending on the configuration, purposes and requirements of the part-processing device 110. In some embodiments, the processor 224 can include more than one processor with each processor being configured to perform different dedicated tasks. In some embodiments, the processor 224 is implemented using a Programmable Logic Controller (PLC), as described in more detail herein.

The part-processing storage component 222 can store data to be used during the operation of the part-processing device 110 and/or to facilitate the operation of the part-processing device 110. Example data can include operating data in respect of its operation, and data in respect of parts, workpieces, or the product etc.

In some embodiments, the part-processing storage component 222 can store software applications executable by the processor 224. For example, the software application can facilitate communication with the station control system 120 and/or operation of the part-processing device 110, including components thereof such as but not limited to tooling components 230, pneumatic actuators, servomotors, and others.

The communication component 226 can include any component for facilitating communication with the station control system 120 via the communication network 130. For example, the communication component 226 can include a wireless transceiver for communicating within a wireless communications network.

The sensor system 210 can include one or more sensors for collecting data from the environment of the part-processing device 110. For example, the sensor system 210 can include a LiDAR device (or other optical/laser, sonar, radar range-finding such as time-of-flight sensors). The sensor system 210 can include optical sensors, such as video cameras and systems (e.g., stereo vision).

The sensor system 210 can detect workpieces within a detection range. Furthermore, the sensor system 210 can detect different properties of the workpieces and generate identification data for the workpieces. The term "workpiece" and "component" used herein refers to a part or a partially finished product. Parts can have different geometric properties, such as but not limited to, different types, shapes, and sizes. The terms "different parts" and/or "different products" used herein refers to parts having such different properties and not merely a plurality of identical parts.

The part-processing device 110 can receive control parameters from the station control system 120, a control interface, or an external system. Based on the control parameters, the part-processing control system 220 can operate the part-processing device 110 to process a workpiece detected by the sensor system 210.

In some embodiments, the part-processing device 110 can be equipped with one or more tooling components 230 for engaging with workpieces detected by the sensor system 210. Tooling components 230 can be used to present a part or process a part. The operation of the tooling components 230 can be controlled by the part-processing control system 220 and, in some embodiments, with consideration of the data collected by the sensor system 210.

Part-processing devices 110 can be equipped with a motion system 240 for facilitating motion of the part-processing devices 110 or components thereof, such as sensors 210 or tooling components 230. The motion system 240 can include one or more pneumatic actuators and/or servomotors.

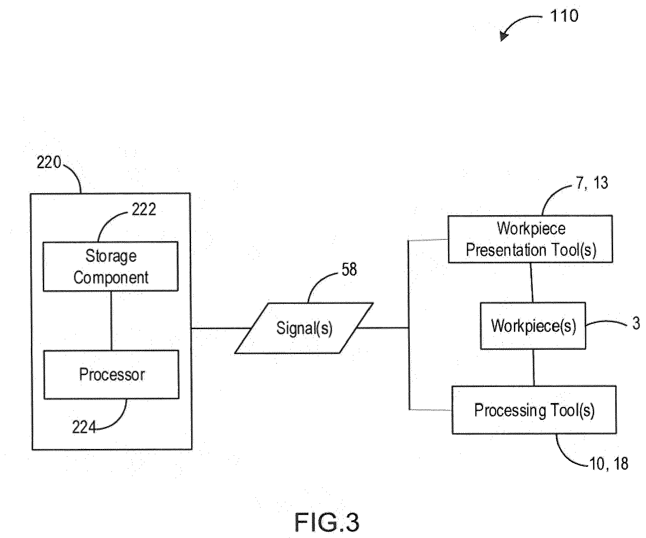

Reference is now made to FIG. 3, which shows another schematic diagram of part-processing device 110 for the automated production station of FIG. 1. Part-processing device 110 can handle one or more workpieces 3. As shown in FIG. 3, part-processing device 110 can include tooling components 230 such as one or more workpiece presentation tools 7, 13 and one or more processing tools 10, 18.

Workpiece presentation tools 7, 13 can, for example, be a part of one or more component delivery devices. In some embodiments, workpiece presentation tools 7,13 can include one or more screws for separating a lead component from an adjacent component. Accordingly, workpiece presentation tool 7, 13 can be configured to: load one or more workpieces 3 at an intake position at a leading end of a stream of like workpieces 3; separate workpiece 3 from the like workpieces 3; accelerate workpiece 3; and deliver workpiece 3 at a predetermined delivery time, delivery position, delivery speed and moving along a delivery trajectory. Workpiece presentation tool 7, 13 can be configured to deliver workpieces 3 before loading one or more subsequent workpieces 3 at the intake position.

Processing tools 10, 18 can, for example, be a part of one or more receiving devices. Processing tool 10 can be configured to conduct one or more value-added operation using one or more of workpieces 3. In some embodiments, processing tool 10, 18 can be configured to assemble two or more of workpieces 3 together. In some embodiments, processing tool 10, 18 can include one or more of assembly tools 10, 18. Accordingly, processing tool 10, 18 can be configured to: receive one or more workpieces 3 while processing tool 10, 18 moves along a processing tool trajectory configured to permit transfer of the component(s) 3 at the delivery position from workpiece presentation tool 7, 13 to processing tool 10, 18; process workpiece 3; and move workpiece 3 to an ejection position.

Part-processing device 110 can also include one or more part-processing control systems 220. As described above, part-processing control system 220 can include one or more processors 224 and related accessories that enable control of at least some aspects of performance of workpiece presentation tool 7, 13 and/or processing tool 10, 18. Processor 224 may, for example, be configured to make decisions regarding the control and operation of part-processing device 110 and cause one or more actions to be carried out based on machine-readable instructions including those stored within part-processing control system 220 and/or other machine-readable instructions received at part-processing control system 220 via wired and/or wireless communication.

Part-processing control system 220 can also include storage component 222, such as memory(ies), memory data devices or register(s). Storage component 222 can include any storage means (e.g., devices) suitable for retrievably storing machine-readable instructions executable by processor 224 of part-processing control system 220 and other data. Storage component 222 can be non-volatile and can include erasable programmable read only memory (EPROM), flash memory, and/or other electromagnetic media suitable for storing electronic data signals in volatile or non-volatile, non-transient form. Storage component 222 can contain machine-readable instructions for execution by processor 224 and also other data related to the operation of workpiece presentation tool 7, 13 and/or processing tool 10, 18. For example, storage component 222 can hold feedback data representative of feedback signals received from one or more sensors (e.g., encoders) associated with workpiece presentation tool 7, 13 and/or processing tool 10, 18.

Machine-readable instructions stored in storage component 222 can cause part-processing control system 220 to cause the execution of various methods disclosed herein including the generation of one or more signals 58 (e.g., output data) useful in the operation of the part-processing device 110. Such machine-readable instructions can be incorporated into one or more computer program products which can be stored on suitable medium or media. In some embodiments, the machine-readable instructions can be executable by processor 224 and configured to cause processor 224 to generate signals 58 useful in the synchronization of two or more operations carried out by workpiece presentation tool 7, 13 and/or processing tool 10, 18.

The synchronization of two or more operations of workpiece presentation tool 7, 13 and processing tool 10, 18 can effectively include electronic camming and/or electronic gearing instead of mechanical cams and/or gears used in some existing applications. In various embodiments, the use of such electronic synchronization can provide more flexibility and improved performance of part-processing device 110 in comparison with conventional systems comprising mechanical synchronization means. Accordingly, in various embodiments, storage component 222 can hold data representative of one or more cam profiles to be used in the operation of workpiece presentation tool 7, 13 and processing tool 10, 18. For example, such cam profile(s) can be in tabular form and can include corresponding positions representative of synchronized trajectories to be followed by workpiece presentation tool 7, 13 and processing tool 10, 18 during operation. In various embodiments, one of workpiece presentation tool 7, 13 and processing tool 10, 18 can be operated as a master device and the other of workpiece presentation tool 7, 13 and processing tool 10, 18 can be operated as a slave device executing movements based on the execution of movements by the master device in order to substantially maintain synchronization between the slave device and the master device. In some embodiments, part-processing device 110 can include one or more master devices and one or more respective slave devices. For example, one or more slave devices can be electronically cammed with a master device.

Accordingly, in various embodiments, the machine-readable instructions can be configured to cause processor 224 to generate signals 58 useful in causing electronic camming of the delivery of workpiece 3 by workpiece presentation tool 7, 13 and of the receipt of workpiece 3 by processing tool 10, 18. In some embodiments, the machine-readable instructions can be configured to cause processor 224 to generate signals 58 useful in causing electronic camming of the loading, separation, acceleration and delivery of workpiece 3 by workpiece presentation tool 7, 13, and, of the receipt of workpiece 3 by processing tool 10, 18.

In various embodiments, the machine-readable instructions can be configured to cause data processor 224 to generate signals 58 useful in controlling movement of workpiece 3 along the delivery trajectory and controlling movement of processing tool 10, 18 along the processing tool trajectory. The delivery trajectory and the processing tool trajectory can be substantially tangential at the delivery position of workpiece 3. Similarly, the machine-readable instructions can be configured to cause processor 224 to generate signals 58 useful in causing the delivery speed of workpiece 3 and a speed of processing tool 10, 18 to be substantially the same when workpiece 3 is at the delivery position. Accordingly, the transfer of workpiece 3 from workpiece presentation tool 7, 13 to processing tool 10, 18 can be relatively smooth (i.e., substantially free of significant acceleration and/or jerk). The smooth transfer or workpiece 3 can also substantially reduce the risk of damaging workpiece 3 and can also permit the transfer of relatively delicate workpieces in some applications.

In various embodiments, the machine-readable instructions can be configured to cause processor 224 to generate signals 58 useful in controlling at least some aspect of the processing of the workpiece 3. For example, such processing can include one or more value-added operations that can be carried out by processing tool 10, 18. Such value-added operation can include the assembly of two or more or workpieces 3 together. Such operation or other operations associated with part-processing device 110 can also be electronically synchronized with one or more of workpiece presentation tool 7, 13 and processing tool 10, 18 and can also operate as a master device or as a slave device depending on the specific application.

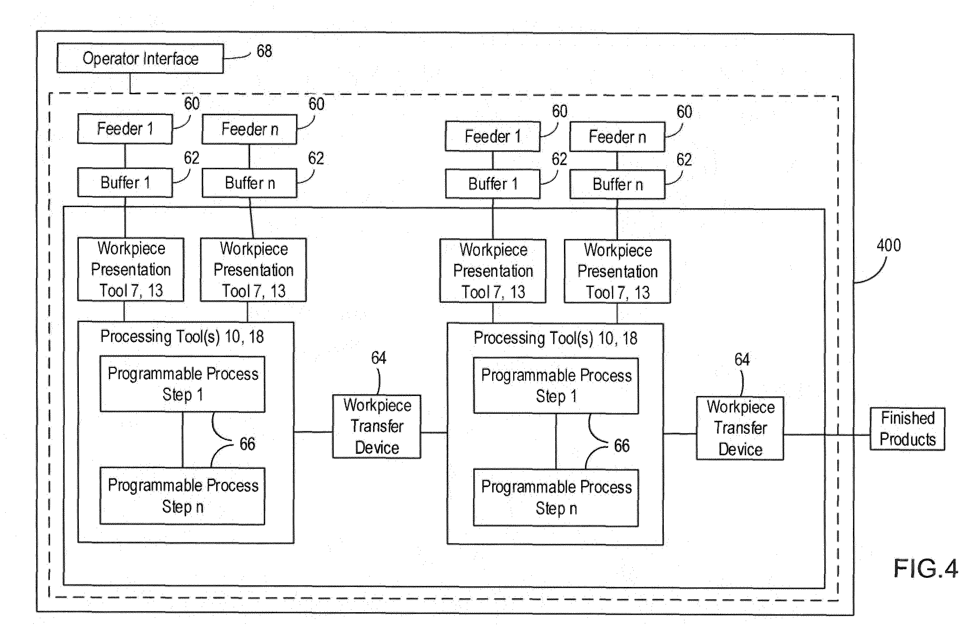

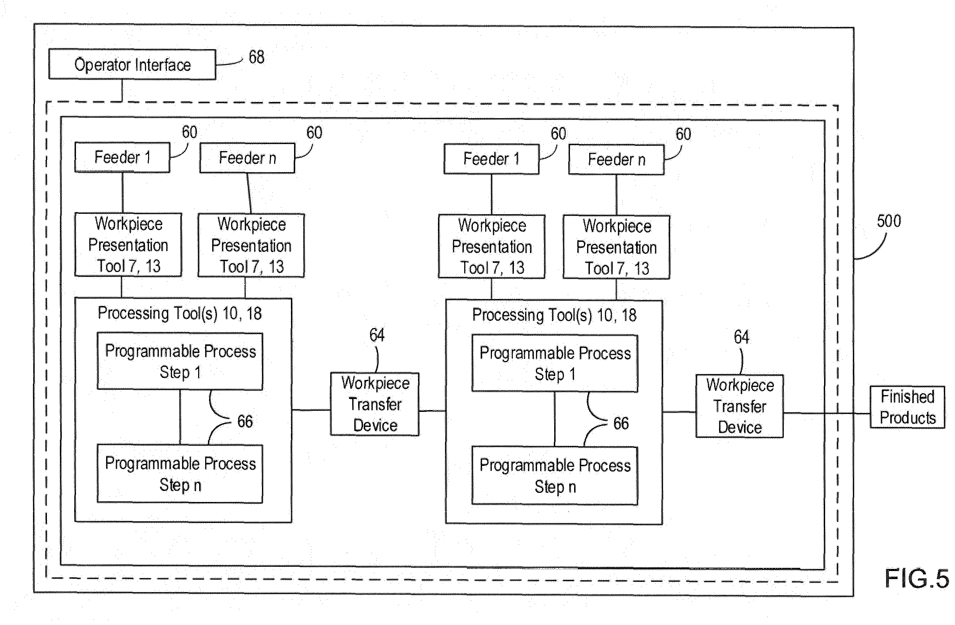

Reference is now made to FIG. 4, which shows a schematic diagram of an example system 400 for processing workpieces using asynchronous feeding of workpieces and FIG. 5 is a schematic diagram of an example system 500 for processing workpieces using synchronous feeding of workpieces. Systems 400 and 500 can have similarities with part-processing device 110 explained above. In some embodiments, part-processing device 110 can be incorporated in whole or in part into one or both of systems 400 and 500. Systems 400 and 500 can be implemented in automated production station 100.

Systems 400 and 500 can be configured to carry out steps from or entire methods disclosed herein. Systems 400, 500 can receive workpieces 3 and/or other raw materials as inputs; progressively add value to them via one or more processing tools 10, 18; and finally discharges them either as discrete finished products, as unfinished products or as rejected scrap (i.e., defective products).

Accordingly, systems 400 and 500 can receive raw materials and/or workpieces 3 from one or more feeders 60. One or more feeders can be a track, or other devices configured to deliver its raw materials or workpieces 3 to one or more workpiece presentation tools 7, 13. The delivery from the feeders 60 can be done directly or via a respective buffer 62. Each workpiece presentation tools 7, 13 or a workpiece transfer device 64 can be numerically controlled and configured to deliver raw materials or workpieces to one or more processing tools 10, 18.

Each processing tool 10, 18 can test a workpiece 3 (i.e., part, component or work-in-progress) via one or more programmable process steps 66, which are provided by the configurable applications interfaced with the software backplane, as described elsewhere herein. A given processing tool 10, 18 can operate in parallel to and/or in series with one or more other processing tools 10, 18. Once the workpiece 3 passes through a final processing tool 10, 18, it can be discharged either as a successfully validated finished product or as rejected scrap, as described in more detail herein. Human interaction with systems 400 and 500 can be done via operator interface 68.

The various elements described above can be controlled at least in part by software resources known as a software backplane. The software backplane can be configured to permit various elements of system to carry out various control functions including: management of inputs and outputs; management of local control tasks, including programmable process steps 66 within processing tools 10, 18 and local inspection tasks within validation stations 70; communications between different elements in system 400, 500 and communication with a human user via operator interface 68, as will be described in more detail elsewhere herein.

In system 400 of FIG. 4, feeders 60 may not be electronically synchronized with any other element or operation of system 400 and can be controlled by the software backplane and the operation of feeders 60 can still be in harmony with other elements of system 400. Accordingly, feeders 60 can supply workpieces 3 to workpiece presentation tools 7, 13 via buffers 62 (e.g., asynchronous feeding) and feeders 60 can be operated to keep a sufficient supply of workpieces 3 in respective buffers 62. Alternatively, in system 500 of FIG. 5, feeders 60 can be electronically synchronized with one or more element or operation of system 500 and can under the control of a master device for example in order to provide synchronous feeding of workpieces 3 directly (i.e., without buffers) to workpiece presentation tools 7, 13.

At least part of part-processing device 110 and systems 400, 500 can include a numerically synchronized control architecture. In various embodiments, workpiece transfer devices 64, workpiece presentation tools 7, 13 and processing tools 10, 18 can be numerically controlled. Accordingly, movements of workpieces 3 such as raw materials and work-in-process through systems 400 and 500 can occur along programmable axes of motion, which can be either rotary or linear. Movement of tooling associated with programmable process steps 66 (provided by the configurable applications interfaced with the software backplane, as described elsewhere herein) of processing tools 10, 18 can also take place along programmable linear and/or rotary axes of motion.

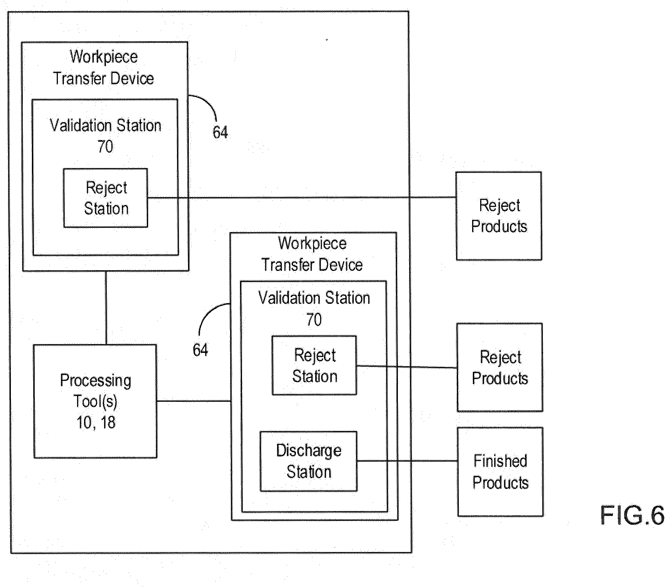

Reference is now made to FIG. 6, which shows a schematic diagram of example workpiece transfer devices 64 including validation stations 70. Validation stations 70 can located at one or more feeders 60, workpiece presentation tools 7, 13, workpiece transfer devices 64 and/or processing tools 10, 18.

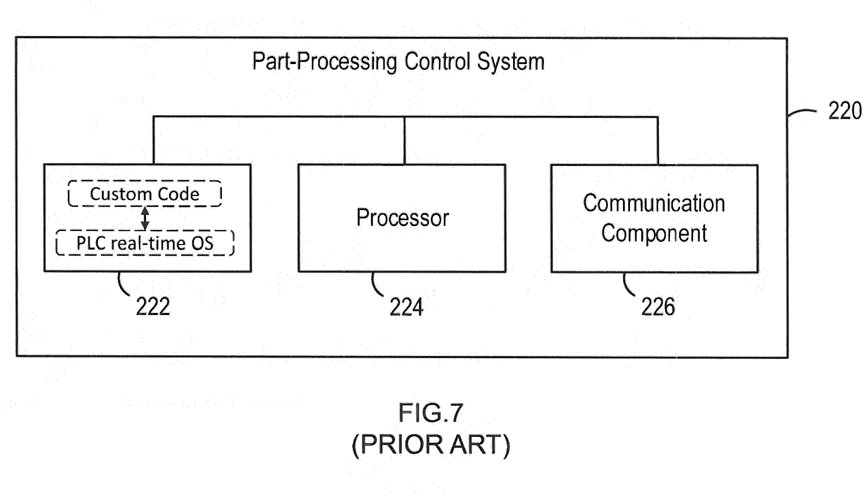

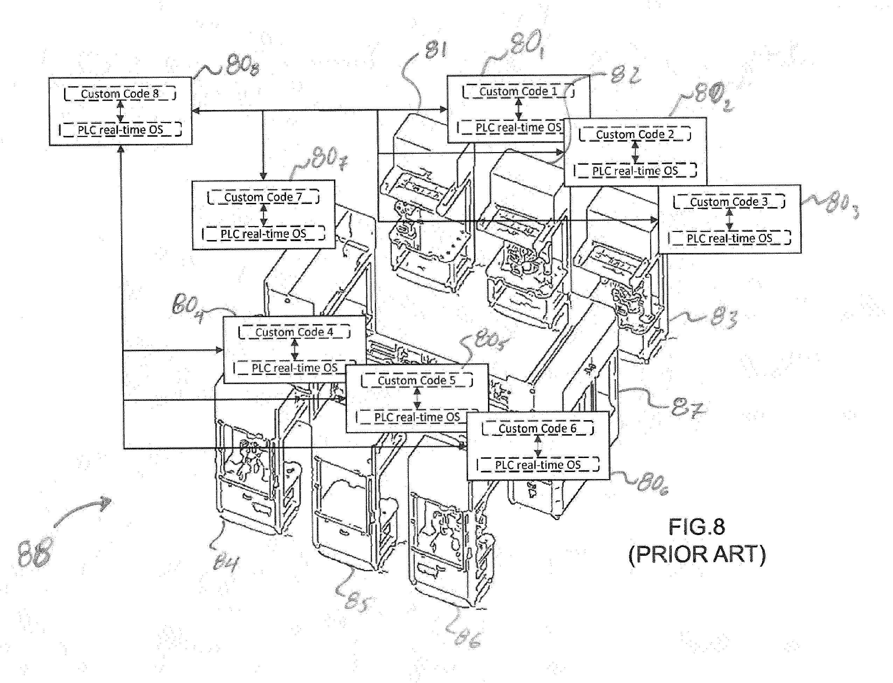

With reference to FIG. 7 and FIG. 8, prior art methods of programming part-processing devices and production stations will now be described. FIG. 7 is a simplified schematic diagram of the software architecture of a part-processing control system 220 in accordance with the prior art. FIG. 8 is a simplified schematic diagram of the software architecture of a production station system in accordance with the prior art.

In the example shown in FIG. 7, the part-processing control system 220 can comprise of a Programmable Logic Controller (PLC) or Programmable Automation Controller (PAC) 224, herein referred to as a "PLC". PLCs are dedicated industrial computers adapted for manufacturing processes, such as assembly lines, machines, robotic devices, or any activity that requires high reliability, and process fault diagnosis. Because of their suitability for real-time processes, PLCs 220 used to control CNC machines are typically controlled using real-time operating systems.

Real-time operating systems are operating systems that implement real-time applications typically without buffer delays. Processing time requirements are measured in extremely short increments of time, and processing must be done within well-defined time constraints, or the system will fail. As such, because timing is critical and each PLC 220 allows for significant flexibility and addresses complex actions requiring precise timing, most PLCs used to control CNC machines are generally programmed at the PLC level with custom code, as shown in FIG. 7, as opposed to using high level computer programming. The real-time operating system organizes all the functions, operations and sequences of the PLC 220 that are not associated with a control task. Examples of such operations include, but are not limited to, executing custom code created by a user, managing memory, detecting and calling interrupts, and establishing communications with various devices such as tooling components 230.

The custom code used by the PLC real-time operating system, on the other hand, relates to a plurality of functions which are required to carry out an automated task. Custom code is typically created by dedicated and highly specialized programmers. Once programmed, custom code needs to be uploaded to the storage component 222 of the PLC 220, tested and debugged in accordance with the process set out elsewhere herein. Examples of operations encoded in custom code include, but are not limited to, initiating conditions for starting a specified task, receiving and evaluating input signals, and specifying output signals.

The above complexities are compounded by the fact that most PLC manufacturers not only require custom code, but also implement their own PLC programming language. While there has been a push in the industry to move towards a common programming language, such languages still vary depending on the PLC manufacturer. In general, there are two basic types of PLC programming language, namely text-based languages, such as Structured Text (ST) and Instructions List (IL), and graphical languages, such as Sequential Function Chart (SFC) and Ladder Diagrams (LD).

Known methods of programming a PLC depend on the PLC manufacturer and programming language, but typically comprises the following steps. As a first step, a programmer must analyze the tasks that will need to be performed by the tooling components 230. Then, the programmer must list all of the conditions possible during performance of the aforementioned tasks. Once these conditions are understood, the programmer needs to create the custom code that will be run on the PLC in order to address each condition. The programmer then needs to add the sequential rungs of each task and address every input and output. Once the custom code is written, the programmer must simulate the custom code and check for errors. If no errors are detected, the code must be loaded onto the storage component 222 of the PLC, as shown in FIG. 7. As will be appreciated by the skilled reader, once the custom code is loaded onto the PLC of a part-processing device 110, detection of any deficiencies and/or bugs in the custom code will lead to a highly specialized programmer having to start the entire process again.

This above-described complexities related to known system is further compounded by the fact that a production station 88, as shown in FIG. 8, often comprises a plurality of part-processing devices 81, 82, 83, 84, 85, 86, as well as a feeder 87, such as the applicant's SuperTrak^{®} conveyance platform. In the example shown in FIG. 8, not only does each part-processing device 81, 82, 83, 84, 85, 86 individually require the development, programming, simulating, testing, debugging of custom code 80₁, 80₂, 80₃, 80₄, 80₅, and 80₆, but feeder 88 will also require custom code 80s. Moreover, the entire production station 87 will also require development, programming, simulating, testing, debugging of custom code 80₇.

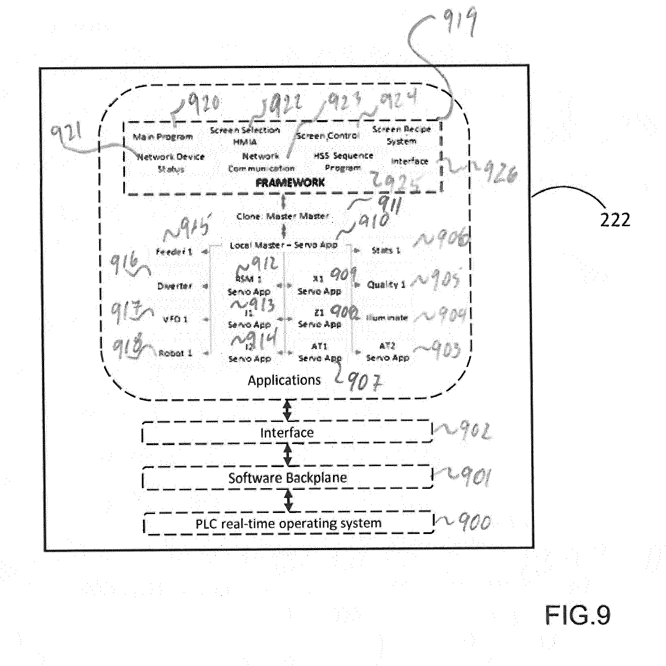

FIG. 9 is a simplified schematic diagram of an unconfigured software architecture of a part-processing control system in accordance with the present disclosure. In particular, FIG. 9 shows the unconfigured base software loaded into the storage component 222 in accordance with an embodiment of the present disclosure. In some embodiments, the storage component comprises a PLC real-time operating system 900. The PLC real-time operating system 900 runs a software backplane 901.

Software backplane 901 comprises an operating system, or part of an operating system, arranged to interact with one or more configurable applications through standardized interfaces. Software backplane 901 can also coordinate operation and interoperation of the configurable applications and coordinate debugging operations. In some embodiments, the software backplane 901 includes the software connections, constructs, and definitions relating to how software elements interact with each other and provides the functions, drivers and firmware necessary for the implementation of the details defined in the configuration.

Configurable applications and related configuration settings can call on the functions that exist as part of the software backplane infrastructure. A set of configuration settings forming part of the configuration can be used to select which functions to use and to enter the appropriate application-specific variable values and other parameters to populate the function. Software backplane functions contain the pre-defined interconnectivity to execute the requested function using the assigned variable values and other parameters.

As shown in FIG. 9, software backplane 901 is interfaced through interface 902 to a configurable application backplane 903 which, when unconfigured, comprises a plurality of generic slots for receiving configurable applications. As will be appreciated by the skilled reader, a "slot" in software terms relates to a standardized interface allowing interoperability between a configurable application and the software backplane. In some embodiments, interface 902 can take the form of an Application Programming Interface (API), or other suitable software intermediary. The architecture shown in FIG. 9 is arranged to be loaded with one or more configurable applications (e.g., one configurable application per generic slot). Once loaded onto the software backplane, the configurable applications can be configured so as to determine their operation and how they interact with each other.

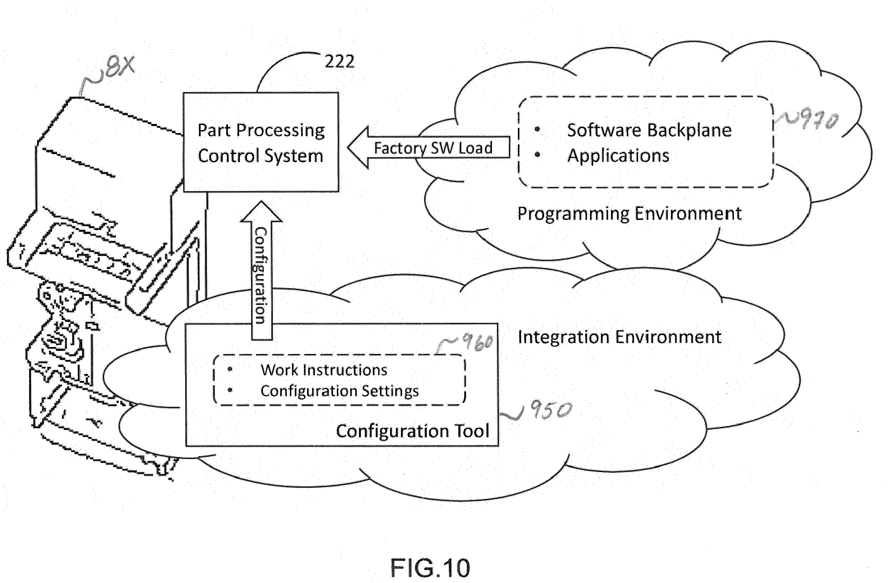

A non-limiting example of such a configured system is shown in FIG. 10, which represents a simplified schematic diagram of a configured software architecture and associated part-processing device 1000 in accordance with the present disclosure. In particular, FIG. 10 shows the software loaded onto the storage component 222 in accordance with an embodiment of the present disclosure. In some embodiments, the storage component comprises a PLC real-time operating system 900. The PLC real-time operating system 900 runs a software backplane 901, which interfaces with an application backplane 903 through interface 902.

As is shown in FIG. 10, the software backplane 901 has been configured by loading and configuring a number of configurable applications configured to control operation of various parts of part-processing device 1000, as described in more detail elsewhere herein.

The framework, or application interface, of the application backplane 903, comprises a plurality of functional modules for interfacing with the software backplane 901. For example, the application interface of the software backplane 903 shown in FIG. 10 includes network device status and network communication modules which provide the executable for the operating system to interface with various networking components. The main program module provides the application interface itself and acts of a sequencer of events. The interface module is an extension of the main program that, for examples, defines how outputs behave in various modes of operation. The (Highspeed Single-Scan) HSS sequence program module assigns state variable for the model of the physical system relating to the part-processing device 110. The screen recipe system interfaces with the Human Machine Interface (HMI) of the part-processing device 110 to add, remove or modify parameters of the part-processing device 110. As will be appreciated by the skilled reader, while a number of functional modules of the application backplane 903 have been described herein, alternative and/or additional modules may be used to provide control of the part-processing device 110 as described herein.

As shown in FIG. 10, in one exemplary embodiment, the part-processing device 110 may comprising four separate machines forming part of tooling components 230 or motion system 240, namely a pick-and-place machine 1001, a RSM machine 1002, a Programmable Assembly Tool (PAM) 1003, also known as an Active Tool (AT), and a feeder 1004.

In this embodiment, the pick-and-place machine 1001 may be a component placement system which comprises a robotic machine that uses a plurality of servomotors to transfer and orient components from an indexing platform to mounts on a platform of a workpiece being processed by the part-processing device 110. The servomotors of the pick-and-place machine 1001 are controlled by configurable applications A1 to A7 (i.e., servo apps A1 to A4 and A6 to A7, along with robot app A5), in which servo apps A1 to A4 and A6 to A7 move tooling of the pick-and-place machine 1001 along various axes (e.g., Cartesian axes X, Z, joint axes J1, J2, etc.). Servo apps A1 to A4 and A6 to A7 are configurable applications allowing a user to define servo parameters, (gearing, servo type, etc.) and form the interconnection to real or virtual axis. Servo apps provide the servo app executable for the operating system to interface with various servo control systems and also provides a set of faults and warnings specific to servomotors. Robot app A5 is a configurable application that provides the robot app executable for the operating system to interface with robot control systems. Robot app A5 defines the transform between the Cartesian coordinate system (e.g., X and Z) and the physical joint axis system (e.g., J1 and J2), and provides a standard set of faults and warnings specific to the robot app.

In this embodiment, a Rapid Speed Matching (RSM) machine 1002 loads a workpiece at the intake position, separates the workpiece from other workpieces, rotationally accelerates the workpiece and presents the workpiece to a rotating receiving device at a predetermined delivery time, delivery position, delivery speed and moving along a delivery trajectory. The servomotor of the RSM machine is controlled by application D1 (i.e., servo app D1). Servo app D1 is also a configurable application allowing a user to define servo parameters, (gearing, servo type, etc.) and form the interconnection to real or virtual axis.

In this embodiment, a vertical mover machine 1003 moves tooling vertically (i.e., linearly) to engage with a workpiece and/or one or more component. The linear servomotor of the vertical mover machine 1003 is controlled by application C1 (i.e., servo app C1). Servo app C1 is also a configurable application allowing a user to define servo parameters, (gearing, servo type, etc.) and form the interconnection to real or virtual axis.

In this embodiment, a feeder machine 1004, such as feeder 87, delivers raw materials or workpieces to one or more workpiece presentation tools of the part-processing device 110. The feeder machine 1004 is controlled by feeder application B1. Feeder application B1 is a configurable application that monitors track levels of feeder machine 1004 to enable the feeder or inhibit machine operation and provides the feeder app executable for the operating system to interface with various feeder control systems. In some embodiments, a quality application is also provided, which comprises a faults machine based on quality events (consecutive faults, etc.).

As will be appreciated by the skilled reader, while the example of FIG. 10 is described with reference to an example part-processing device 110 having specific tooling components 230 and motion system 240, and associated configurable application modules, the methods and systems described herein can be applied to any other part-processing device 110 having different tooling components 230 and motion systems 240, and different associated configurable application modules.

One of the significant benefits of the methods and systems described herein is that part-processing device 110 can have tooling components 230 and motion system 240 replaced and/or modified, without the need to entirely reprogram the part-processing control system 220. The configurable applications as described herein allow the type, timing, position, speed, velocity, and acceleration of each of the above-described tooling components 230 to be selected by configuring the configurable applications, as described elsewhere herein.

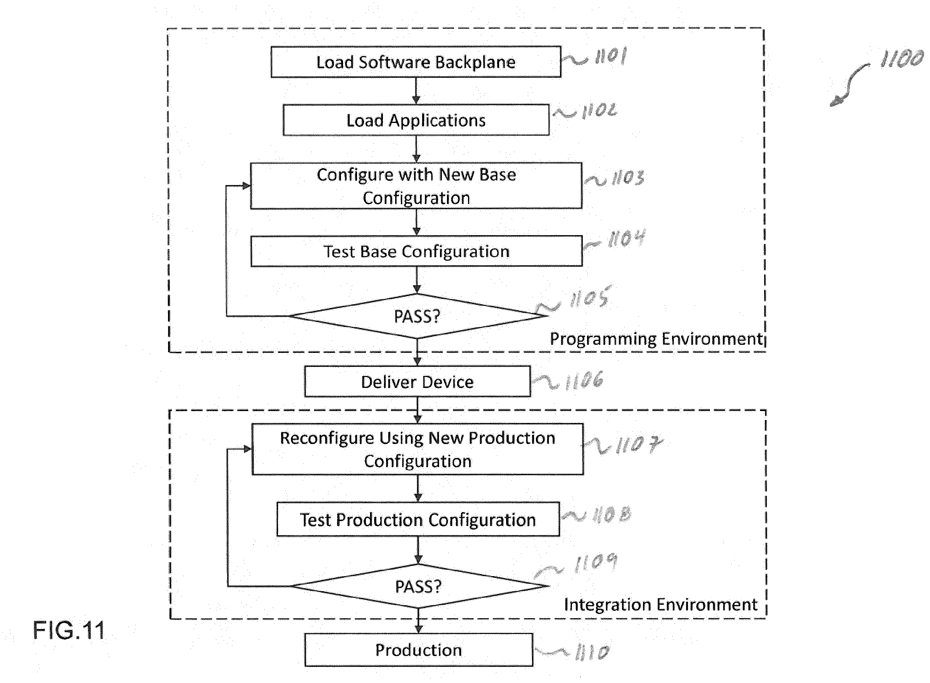

FIG. 11 is a schematic diagram of a system 1100 for programming and configuring a part-processing device 110 or a production station 100 in accordance with the present disclosure. Each of the part-processing devices 81, 82, 83, 84, 85, 86 shown in FIG. 8, along with feeder 87 and production station 88 can be programmed and configured by the system of FIG. 11 and in accordance with the method of FIG. 12 instead of as described with reference to the prior art, as described elsewhere herein.

In particular, with reference to FIG. 11, the software backplane 901 and a set of configurable applications, each forming part of factory software load 1101, are loaded onto the part-processing control system 220. In some embodiments, the configurable applications selected for upload are related to the devices forming part of the part-processing device 110. For example, in some embodiments, the configurable applications selected relates to the sensors 210, tooling components 230 and motion system 240 of the part-processing device 110, as described in more detail elsewhere herein. In other embodiments, generic configurable applications are loaded, and each can be configured to relate to elements of the sensors 210, tooling components 230 and motion system 240 of part-processing device 110. Factory software load 1101 can be prepared and loaded onto the part-processing control system 222 of part-processing device 110 in a programming environment 1103, such as the premises of a machine manufacturer.

Working instructions and configuration settings, each forming part of configuration 1106, can be created by a user using configuration tool 1105. In some embodiments, configuration tool 1105 can be a spreadsheet, such as an Excel^{®} spreadsheet, or a database, that is arranged to be read by the part-processing control system 220 and thereby used to configure the configurable applications used by the software backplane 901. Configuration settings may include, but are not limited to, the type of sensor 210, tooling component 230 or motion system 240, or part thereof, that a configurable application is configured to control. Work instructions may include, but are not limited to, the timing, position, speed, velocity, and acceleration of servomotors and/or other tooling components 230. Work instructions can also be used to select the type of configurable application to be used.

Configuration 1106 can be prepared and loaded onto the part-processing control system 222 of part-processing device 110 in an integration environment 1104, such as the premises of a customer.

In other embodiments, configuration tool 1105 can be a dedicated piece of software that allows a user to configure the configurable applications used by the software backplane 901 and visualize how the configuration will affect the operation of the part-processing device 110.

FIG. 12 is a representation of a method 1200 of commissioning a part-processing device 110 or a production station 100 in accordance with the present disclosure. In a programming environment, at, for example, a CNC machine manufacturer's factory, a software backplane 901 is uploaded to the part-processing device 110 or production station 100 at step 1201. Then, at step 1202, the configurable applications required by the part-processing device 110 or production station 100 are loaded thereon at step 1202.

Then, in order to test the part-processing device 110 or production station 100, the configuration tool 1105 is used to configure the configurable applications of the part-processing device 110 or production station 100 at step 1203. The purpose of the new base configuration is to ensure that the part-processing device 110 or production station 100 functions without fault. In particular, the test can determine whether the routing and configuration of the software backplane are functioning correctly.

At step 1204, tests can be run in order to determine if the part-processing device 110 and/or production station 100 function without fault. At step 1205, a determination is made as to whether the part-processing device 110 or production station 100 has passed the test performed at step 1204. If the part-processing device 110 or production station 100 has not passed the test set out at step 1204, the base configuration is modified and a new base configuration is used to configure the part-processing device 110 or production station 100 at step 1203.

If the part-processing device 110 and/or production station 100 does pass the test performed at steps 1204, the part-processing device 110 or production station 100 can be delivered to a customer premises (or other location in which the part-processing device 110 or production station 100 will be used for manufacturing articles), for example, at step 1206. Once delivered, the part-processing device 110 and/or production station 100 can be integrated. Integration of the part-processing device 110 or production station 100 includes step 1207, during which the part-processing device 110 and/or production station 100 is configured using configuration tool 1105. In particular, configuration tool 1105 can be used to configure the configurable applications of the part-processing device 110 or production station 100 with a production configuration, which will instruct the part-processing device 110 and/or production station 100 to create and/or assemble a product, or a portion thereof.

Then, at step 1208, the production configuration is tested in order to determine whether it functions correctly. Such tests can include, but are not limited to, processing a component or a part thereof. At step 1209, a determination is made as to whether the test performed at step 1208 was successful. If the test was not successful, the configuration tool can be used to modify the production configuration and load a new production configuration into the part-processing device 110 and/or production station 100 at step 1207. If, however, the test was determined to be successful at step 1209, commissioning of the part-processing device 110 or production station 100 can be completed and production can commence at step 1210.

The systems and methods described herein provide self-contained and modular software control of self-contained and modular electronically cammed components, such as sensors 210, tooling components 230 and motion system 240 of the part-processing device 110. As such, the skilled reader will readily understand that the the methods and systems described herein allow users to take advantage of the intrinsic flexibility and customizability of electronically cammed CNC machines.

It will be appreciated that numerous specific details are set forth in order to provide a thorough understanding of the example embodiments described herein. However, it will be understood by those of ordinary skill in the art that the embodiments described herein may be practiced without these specific details. In other instances, well-known methods, procedures and components have not been described in detail so as not to obscure the embodiments described herein. Furthermore, this description and the drawings are not to be considered as limiting the scope of the embodiments described herein in any way, but rather as merely describing the implementation of the various embodiments described herein.

In addition, as used herein, the wording "and/or" is intended to represent an inclusive-or. That is, "X and/or Y" is intended to mean X or Y or both, for example. As a further example, "X, Y, and/or Z" is intended to mean X or Y or Z or any combination thereof. It should be noted that the term "coupled" used herein indicates that two elements can be directly coupled to one another or coupled to one another through one or more intermediate elements.

The embodiments of the systems and methods described herein may be implemented in hardware or software, or a combination of both. These embodiments may be implemented in computer programs executing on programmable computers, each computer including at least one processor, a data storage system (including volatile memory or non-volatile memory or other data storage elements or a combination thereof), and at least one communication interface. For example, and without limitation, the programmable computers may be a server, network appliance, embedded device, computer expansion module, a personal computer, laptop, personal data assistant, cellular telephone, smart-phone device, tablet computer, a wireless device or any other computing device capable of being configured to carry out the methods described herein.

In some embodiments, the communication interface may be a network communication interface. In embodiments in which elements are combined, the communication interface may be a software communication interface, such as those for inter-process communication (IPC). In still other embodiments, there may be a combination of communication interfaces implemented as hardware, software, and combination thereof.

Program code may be applied to input data to perform the functions described herein and to generate output information. The output information is applied to one or more output devices, in known fashion. Each program, configurable application and/or software module or component may be implemented in a high-level procedural or object-oriented programming and/or scripting language, or both, to communicate with a computer system. Non-limiting examples include IEC 61131-3, VB, VBA, C/C++, VB.net and C#. However, the programs may be implemented in assembly or machine language, if desired. In any case, the language may be a compiled or interpreted language. Each such computer program may be stored on a storage media or a device (e.g., ROM, magnetic disk, optical disc) readable by a general or special purpose programmable computer, for configuring and operating the computer when the storage media or device is read by the computer to perform the procedures described herein. Embodiments of the system may also be considered to be implemented as a non-transitory computer-readable storage medium, configured with a computer program, where the storage medium so configured causes a computer to operate in a specific and predefined manner to perform the functions described herein.

Furthermore, the system, processes and methods of the described embodiments are capable of being distributed in a computer program product comprising a computer readable medium that bears computer usable instructions for one or more processors. The medium may be provided in various forms, including one or more diskettes, compact disks, tapes, chips, wireline transmissions, satellite transmissions, internet transmission or downloadings, magnetic and electronic storage media, digital and analog signals, and the like. The computer useable instructions may also be in various forms, including compiled and non-compiled code.

Various embodiments have been described herein by way of example only. Various modification and variations may be made to these example embodiments without departing from the scope of the appended claims.

Further understanding may be gained through contemplation of the numbered embodiments below.
1. A computer numerically controlled part-processing device including one or more tooling components and a part-processing control system, the part-processing control system comprising:
   a storage component having stored thereon:
      i) a software backplane arranged to run on an operating system of the part-processing control system and to interface with one or more configurable applications; and
      ii) one or more configurable applications associated with the one or more tooling components, the one or more configurable applications being arranged to interface with the software backplane; and
   a processor arranged to receive configuration information and to configure the one or more configurable applications to control the one or more tooling components.
2. The computer numerically controlled part-processing device of embodiment 1, wherein the configuration information includes configuration settings and work instructions.
3. The computer numerically controlled part-processing device of any one of embodiments 1 or 2, wherein the configuration settings relating to a configurable application of the one or more configurable applications include information relating to the type of tooling component associated with that configurable application.
4. The computer numerically controlled part-processing device of any one of embodiments 1 to 3, wherein the work instructions relating to a configurable application of the one or more configurable applications include one or more of the timing, position, speed, velocity, and acceleration of the tooling component associated with that configurable application.
5. The computer numerically controlled part-processing device of any one of embodiments 1 to 4, wherein each the one or more tooling components comprises one or more actuators, and wherein each actuator is controlled by a dedicated configurable application.
6. The computer numerically controlled part-processing device of embodiment 5, wherein the one or more actuators include one or more servomotors.
7. The computer numerically controlled part-processing device of any one of embodiments 1 to 6, further comprising a sensor system including one or more sensors for collecting data from the environment of the part-processing device, and wherein:
   the storage component has stored thereon one or more configurable sensor applications associated with the one or more sensors; and
   the processor is further arranged to configure the one or more configurable sensor applications associated with the one or more sensors to control the one or more sensors.
8. The computer numerically controlled part-processing device of embodiment 7, wherein the one or more sensors comprise one of a LiDAR device or a video camera.
9. The computer numerically controlled part-processing device of any one of embodiments 1 to 8, further comprising a motion system including one or more motion actuators for facilitating motion of the tooling components of the part-processing device, and wherein:
   the storage component has stored thereon one or more configurable motion actuator applications associated with the one or more motion actuators; and
   the processor is further arranged to configure the one or more configurable motion actuator applications associated with the one or more motion actuators to control the one or more motion actuators.
10. The computer numerically controlled part-processing device of embodiment 9, wherein the one or more motion actuators comprise one of a pneumatic actuator and a servomotor.
11. The computer numerically controlled part-processing device of any one of embodiments 1 to 10, wherein the processor is further configured to receive configuration information from an application configuration tool.
12. The computer numerically controlled part-processing device of embodiment 11, wherein the configuration tool comprises a software program comprising a user interface that allows a user to enter configuration information and visualize how the configuration information will affect the operation of the part-processing device.
13. The computer numerically controlled part-processing device of any one of embodiments 1 to 10, wherein the processor is further configured to read configuration information from a spreadsheet or a database.
14. The computer numerically controlled part-processing device of any one of embodiments 1 to 13, wherein the software backplane is programmed with routing of work and configuration information.
15. The computer numerically controlled part-processing device of embodiment 14, wherein the routing of work and configuration information includes the software connections, constructs, and definitions relating to how software elements interact with each other.
16. A production station comprising a plurality of computer numerically controlled part-processing devices in accordance with any of embodiments 1 to 15.
17. A method of programming a part-processing control system of a computer numerically controlled part-processing device including one or more tooling components, the method comprising:
   loading a software backplane onto a storage component of the part-processing control system, the software backplane being arranged to run on an operating system of the part-processing control system and to interface with one or more configurable applications;
   loading one or more configurable applications associated with the one or more tooling components onto a storage component of the part-processing control system, the one or more configurable applications being arranged to interface with the software backplane; and
   configuring the one or more configurable applications to control the one or more tooling components.
18. The method of embodiment 17, wherein the configuration information includes configuration settings and work instructions.
19. The method of any one of embodiments 17 or 18, wherein the configuration settings relating to a configurable application of the one or more configurable applications include information relating to the type of tooling component associated with that configurable application.
20. The method of any one of embodiments 17 to 19, wherein the work instructions relating to a configurable application of the one or more configurable applications include one or more of the timing, position, speed, velocity, and acceleration of the tooling component associated with that configurable application.
21. The method of any one of embodiments 17 to 20, wherein each the one or more tooling components comprises one or more actuators, and wherein each actuator is controlled by a dedicated configurable application.
22. The method of embodiment 21, wherein the one or more actuators include one or more servomotors.
23. The method of any one of embodiments 17 to 22, wherein the computer numerically controlled part-processing device further comprises a sensor system including one or more sensors for collecting data from the environment of the part-processing device, and wherein the method further comprises:
   loading one or more configurable applications associated with the one or more sensors, the one or more configurable sensor applications being arranged to interface with the software backplane; and
   configuring the one or more configurable sensor applications to control the one or more sensors.
24. The method of embodiment 23, wherein the one or more sensors comprise one of a LiDAR device or a video camera.
25. The method of any one of embodiments 17 to 24, wherein the computer numerically controlled part-processing device further comprises a motion system including one or more motion actuators for facilitating motion of the tooling components of the part-processing device, and wherein the method further includes:
   loading one or more configurable motion actuator applications associated with the one or more motion actuators, the one or more configurable motion actuator applications being arranged to interface with the software backplane; and
   configuring the one or more configurable motion actuator applications to control the one or more sensors.
26. The method of embodiment 25, wherein the one or more motion actuators comprise one of a pneumatic actuator and a servomotor.
27. The method of any one of embodiments 17 to 26, wherein the software backplane is programmed with routing of work and configuration information.
28. The method of embodiment 27, wherein the routing of work and configuration information includes the software connections, constructs, and definitions relating to how software elements interact with each other.
29. A system for programming a part-processing control system of a computer numerically controlled part-processing device including one or more tooling components, the part-processing control system arranged to control the one or more tooling components, the system comprising:
   a first computing device in data communication with the part-processing control system, the first computing device including a first processor and a first non-transitory computer-readable medium storing instructions that, when executed by the first processor cause the first computing device to:
      load a software backplane onto a storage component of the part-processing control system, the software backplane being arranged to run on an operating system of the part-processing control system and to interface with one or more configurable applications; and
      load one or more configurable applications associated with the one or more tooling components onto a storage component of the part-processing control system, the one or more configurable applications being arranged to interface with the software backplane; and
   a second computing device in data communication with the control system, the second computing device including a second processor and a second non-transitory computer-readable medium storing instructions that, when executed by the second processor cause the second computing device to:
      load configuration information onto a storage component of the part-processing control system to configure the one or more configurable applications to control the one or more tooling components.
30. The system of embodiment 29, wherein the configuration information includes configuration settings and work instructions.
31. The system of any one of embodiments 29 or 30, wherein the configuration settings relating to a configurable application of the one or more configurable applications include information relating to the type of tooling component associated with that configurable application.
32. The system of any one of embodiments 29 to 31, wherein the work instructions relating to a configurable application of the one or more configurable applications include one or more of the timing, position, speed, velocity, and acceleration of the tooling component associated with that configurable application.
33. The system of any one of embodiments 29 to 32, wherein each the one or more tooling components comprises one or more actuators, and wherein each actuator is controlled by a dedicated configurable application.
34. The system of embodiment 33, wherein the one or more actuators include one or more servomotors.
35. The system of embodiment 33, wherein the second computing device is further caused to implement a user interface that allows a user to enter configuration information and visualize how the configuration information will affect the operation of the part-processing device.
36. The system of any one of embodiments 29 to 35, wherein the software backplane is programmed with routing of work and configuration information.
37. The system of embodiment 36, wherein the routing of work and configuration information includes the software connections, constructs, and definitions relating to how software elements interact with each other.

## Claims

1. A computer numerically controlled part-processing device including one or more tooling components and a part-processing control system, the part-processing control system comprising:
a storage component having stored thereon:
i) a software backplane arranged to run on an operating system of the part-processing control system and to interface with one or more configurable applications; and
ii) one or more configurable applications associated with the one or more tooling components, the one or more configurable applications being arranged to interface with the software backplane; and
a processor arranged to receive configuration information and to configure the one or more configurable applications to control the one or more tooling components.

2. The computer numerically controlled part-processing device of claim 1, wherein the configuration information includes configuration settings and work instructions.

3. The computer numerically controlled part-processing device of any of claims 1 or 2, wherein the configuration settings relating to a configurable application of the one or more configurable applications include information relating to the type of tooling component associated with that configurable application.

4. The computer numerically controlled part-processing device of any of claims 1 to 3, wherein the work instructions relating to a configurable application of the one or more configurable applications include one or more of the timing, position, speed, velocity, and acceleration of the tooling component associated with that configurable application.

5. The computer numerically controlled part-processing device of any of claims 1 to 4, wherein each the one or more tooling components comprises one or more actuators, and wherein each actuator is controlled by a dedicated configurable application.

6. The computer numerically controlled part-processing device of any of claims 1 to 5, further comprising a sensor system including one or more sensors for collecting data from the environment of the part-processing device, and wherein:
the storage component has stored thereon one or more configurable sensor applications associated with the one or more sensors; and
the processor is further arranged to configure the one or more configurable sensor applications associated with the one or more sensors to control the one or more sensors.

7. The computer numerically controlled part-processing device of any of claims 1 to 6, further comprising a motion system including one or more motion actuators for facilitating motion of the tooling components of the part-processing device, and wherein:
the storage component has stored thereon one or more configurable motion actuator applications associated with the one or more motion actuators; and
the processor is further arranged to configure the one or more configurable motion actuator applications associated with the one or more motion actuators to control the one or more motion actuators.

8. The computer numerically controlled part-processing device of any of claims 1 to 7, wherein the software backplane is programmed with routing of work and configuration information.

9. The computer numerically controlled part-processing device of claim 8, wherein the routing of work and configuration information includes the software connections, constructs, and definitions relating to how software elements interact with each other.

10. A method of programming a part-processing control system of a computer numerically controlled part-processing device including one or more tooling components, the method comprising:
loading a software backplane onto a storage component of the part-processing control system, the software backplane being arranged to run on an operating system of the part-processing control system and to interface with one or more configurable applications;
loading one or more configurable applications associated with the one or more tooling components onto a storage component of the part-processing control system, the one or more configurable applications being arranged to interface with the software backplane; and
configuring the one or more configurable applications to control the one or more tooling components.

11. A system for programming a part-processing control system of a computer numerically controlled part-processing device including one or more tooling components, the part-processing control system arranged to control the one or more tooling components, the system comprising:
a first computing device in data communication with the part-processing control system, the first computing device including a first processor and a first non-transitory computer-readable medium storing instructions that, when executed by the first processor cause the first computing device to:
load a software backplane onto a storage component of the part-processing control system, the software backplane being arranged to run on an operating system of the part-processing control system and to interface with one or more configurable applications; and
load one or more configurable applications associated with the one or more tooling components onto a storage component of the part-processing control system, the one or more configurable applications being arranged to interface with the software backplane; and
a second computing device in data communication with the control system, the second computing device including a second processor and a second non-transitory computer-readable medium storing instructions that, when executed by the second processor cause the second computing device to:
load configuration information onto a storage component of the part-processing control system to configure the one or more configurable applications to control the one or more tooling components.

12. The system of claim 11, wherein the configuration information includes configuration settings and work instructions.

13. The system of any of claims 11 or 12, wherein the configuration settings relating to a configurable application of the one or more configurable applications include information relating to the type of tooling component associated with that configurable application.

14. The system of any of claims 12 to 13, wherein the work instructions relating to a configurable application of the one or more configurable applications include one or more of the timing, position, speed, velocity, and acceleration of the tooling component associated with that configurable application.

15. The system of claim 14, wherein the second computing device is further caused to implement a user interface that allows a user to enter configuration information and visualize how the configuration information will affect the operation of the part-processing device.
